# EUROPEAN PATENT APPLICATION

(11) **EP 2 719 269 A1**
(43) Date of publication of application: **16.04.2014**
(21) Application number: 13187839.9
(22) Date of filing: 09.10.2013
(51) Int. Cl.: A01B 33/14

(54) **Cutter unit for a rotary tiller machine**

(30) Priority: 09.10.2012 IT PD20120293
(71) Applicant: Valentini Antonio S.r.l., 35012 Camposampiero (PD) (IT)
(72) Inventor: Valentini, Antonio, 35012 Camposampiero (PD) (IT)
(74) Representative: Gallo, Luca

(57) **Abstract**

Cutter unit for a rotary tiller machine, which comprises a first fixed flange (3) fixed to the rotating driven shaft (2) of the rotary tiller machine, and a second movable flange, mechanically couplable at the front of the first flange (3). Multiple blades (7) are rigidly constrainable to the flanges (3, 4) by means of removable retention means (10) comprising pairs of shaped plates (11', 11"), of which a first plate (11') is provided with two pins (12) projecting from its inner face and a second plate (11") is provided with at least two corresponding holes (13) obtained from its inner face and susceptible of receiving the pins (12). The outer faces of each pair of shaped plates (11) define a slide engageable in a guide (5) obtained between the flanges (3, 4). The coupling portion (7") of each blade (7) is interposed between the pair of shaped plates (11) with the pins (12) arranged to cross through the through holes (14) obtained in the coupling portion (7").

A locking pin (15) is provided for each slide, susceptible of crossing through aligned openings (16) obtained on the plates (11', 11") and of removably and mechanically engaging together the first fixed flange (11') and the second movable flange (11").

## Description

The present invention regards a cutter unit for a rotary tiller machine, according to the preamble of the main claim.

The cutter unit of the present invention is intended to be employed on a rotary tiller machine in the field of agriculture, for working the earth.

As is known, rotary tiller machines generally comprise a support frame, which is towed on the earth to be worked by a tractor, and supports a rotating shaft between two lateral flanks. A plurality of cutter units are mounted in succession at a regular distance on such rotating shaft, and by rotating such cutter units cause the chopping and mixing up of the earth/ground surface layers.

More in detail, the rotating shaft receives the torque for its rotation from a power take-off of the tractor through suitable drive means. Each cutter unit (or cutting blade-holder or blade-holder unit) is provided with a discoidal flange, which is fixed to the rotating shaft with tubular form and peripherally supports a plurality of shaped blades (or cutting blades). According to the models and the specific requirements, the number of such blades can vary, generally from two to six.

The cutter units, rotating at high speed, with the advancement on the earth/ground cause the erosion of an earth/ground layer, cutting it up into clods which are mixed up and stratified immediately behind the tiller.

In the rear part, the frame supports a casing that has the object of preventing the clods lifted by the blades from being thrown a distance, in such a manner ensuring that they are stratified after the passage of the cutter units.

As is known, the blades are mounted in a removable manner on the flanges of the cutter units in order to allow performing the normal maintenance and/or substitution operations.

In the present field, there has for some time been the problem of developing a cutter unit that allows obtaining a system for mounting the blades that is simultaneously quick and safe.

Indeed, given the numerous stresses to which the blades are subjected during normal work, it is necessary on one hand to arrange a system for the mechanical fixing of the blades to the flanges of the cutter units that is particularly rigid and strong, and on the other hand, given the rapid wear that the blades encounter during working, it is necessary to arrange fixing means that allow carrying out the normal maintenance and/or substitution operations in a practical and quick manner.

In most of the solutions of known type that are available on the market today, the connection of the blades to the flanges of the cutter units occurs through the use of multiple screws and/or pins, i.e. usually by means of the use of two screws to be tightened in aligned holes obtained on the flange and on the blade. These fixing means have in practice proven that they are not very practical, since they require rather long and complex operations for the normal maintenance of the blades, due to the numerous screwing and unscrewing operations that must be carried out in order to assemble and disassemble all the single blades of each rotating cutter.

It must be considered that on the tubular shaft of a tiller machine, numerous cutter units are usually mounted in succession, for example 10-12 cutter units or more, each of which usually supports, as said, 2-6 blades; consequently, 40-80 blades are provided overall, which involve hundreds of screwing/unscrewing operations for the screws for the complete substitution of all the blades in a rotary tiller machine.

Further drawback of the fixing means of known type lies in the fact that the maintenance technician must often handle numerous elements necessary for the mechanical connection of the blades, such as screws, nuts, clips etc. which risk being lost, especially if one considers that the aforesaid maintenance operations must often be carried out in the field, i.e. in settings that are not fully equipped.

For the purpose of overcoming these drawbacks, several improved solutions have been developed more recently.

A first solution is described in the European patent application EP 1 222 844, in which the use is provided of a cutter unit equipped with multiple blades, which are inserted with one end in seats obtained radially in the flange of the cutter unit, within which they are fixed by means of a single screw.

The obtainment of the seats is a difficult structural complication that moreover does not allow retaining the blades with sufficient rigidity.

A second solution is described in the international patent application No. WO 98/51141. In accordance with such solution, the peripheral edge of the blades is shaped with two notches provided with openings arranged on the same peripheral edge and capable of allowing the passage of the stem of fixing screws.

The latter are capable of being inserted inside the aforesaid grooves in order to be engaged in corresponding counter-threaded holes obtained directly on the flange of the rotor of the cutter unit.

Advantageously, the blades are disengaged by simply loosening the screws and removing them by making the stems slide inside the notches.

The retention force of the screws is nevertheless considered insufficient, and thus the use of a locking plate is provided; alternatively, there is the possibility of shaping the notches in a manner such to prevent the blades from moving in an opposite sense with respect to the work rotation, as well as in a manner such to simultaneously prevent the rotation of the cutting blades around the rear screw (with respect to the rotation sense).

For such purpose, the two notches have a curved conformation, with the front notch provided with a step for preventing the rotation due to the centrifugal force of the blade around the rear screw.

A solution similar to that described above is likewise contained in the French patent FR 2330295, in which the two notches are configured on two separate edges of the blade in a manner so as to limit the accidental separation risks due to the forces exerted by the earth/ground on the cutting blades of the blades and due to the centrifugal force.

Even though the above-indicated solutions of known type, which provide for the presence of two open notches on the peripheral edge, must be considered particularly advantageous due to the simplicity and rapidity with which they allow the substitution of the cutting blades (through the simple loosening of the screws), they have shown to be not entirely reliable with regard to the required safety.

The United States patent US 2,802,408 provides for a similar solution in which the single blades are fixed to the discoidal flange of the cutter unit by means of two screws, of which one is inserted in a through hole of the blade, the second in a slot-like open notch of the blade.

Finally, known from the patent application EP 2156722 is a cutter unit which peripherally supports a plurality of support bodies, each obtained in a single element and provided with a radial guide in which the end of a blade is inserted in engagement relationship. A pin transverse to the guide is inserted in opposite openings obtained in the flanks of the guide and retains the blade inside the guide.

The aforesaid cutter unit solution has in practice proven that it does not lack drawbacks.

A first drawback lies in the fact that such cutter unit does not ensure sufficient mechanical retention of the blade, given that the guide is radial and consequently the pin is subjected to strong shearing actions.

A second drawback lies in the fact that if one must change tool, e.g. one blade with another with different shape and/or size, it is necessary to disassemble the support body and substitute it with another with the desired characteristics. The support body is fixed with two screws to the flange of the cutter unit; long work times are therefore required in order to carry out the substitution of the blades with the relative support bodies, and hence the costs of the workers assigned to complete such operations are also high.

A third drawback lies in the fact that the support body is subject to quick wear given its position, with the consequence that it must be frequently removed in order to substitute it with another new support body.

A fourth drawback lies in the fact that the blade is free to be moved inside the guide of the support body, given that an initial clearance is provided for its facilitated insertion; consequently, wear phenomena are generated that lead to the degradation of the guide and the blade and with the further drawback that the machine itself becomes particularly noisy.

Main object of the present finding is therefore to eliminate the drawbacks of the solutions of known type mentioned above, by providing a cutter unit for a rotary tiller machine which arranges a mechanical connection for the blades which is simultaneously extremely safe, practical and quick in order to allow an easy and frequent maintenance of the blades themselves.

A further object of the present finding is to provide a cutter unit for a rotary tiller machine which is inexpensive and entirely reliable in operation.

### Brief description of the drawings

These objects and still others are all attained by the cutter unit for a rotary tiller machine of the present invention, whose technical characteristics are clearly seen in the contents of the below-reported claims and the advantages thereof will be more evident from the following detailed description, made with reference to the enclosed drawings which represent a merely exemplifying and non-limiting embodiment of the invention, in which:

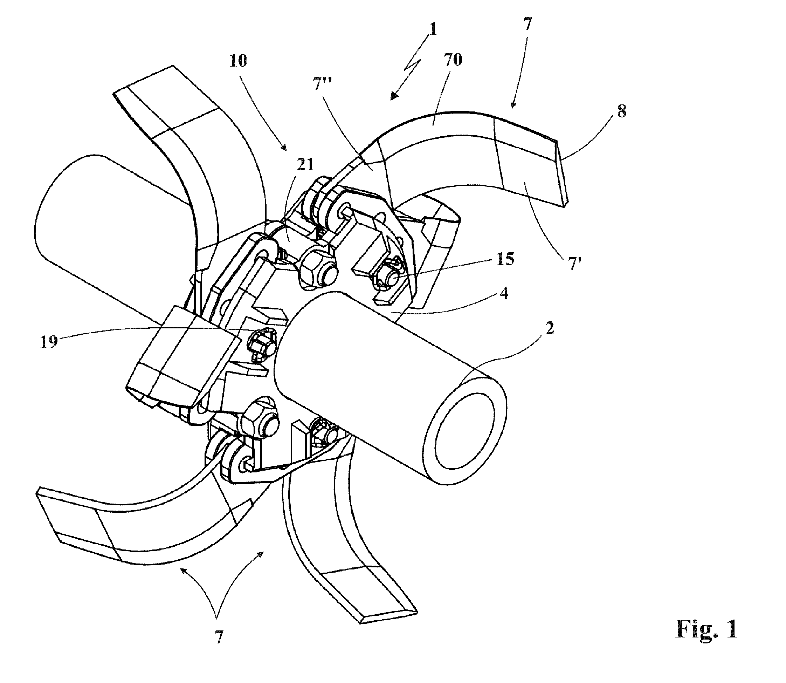

**FIG. 1** shows a perspective view of one embodiment of a cutter unit with six blades, object of the present invention, mounted on a shaft of a load-bearing tiller machine;

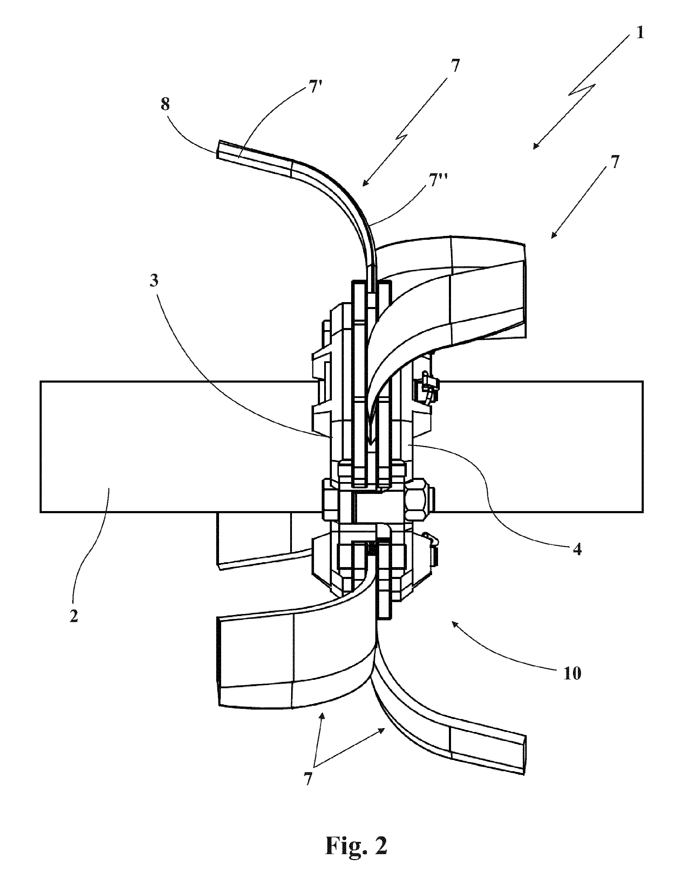

**FIG. 2** shows a side view of the cutter unit, object of the present invention, of figure 1;

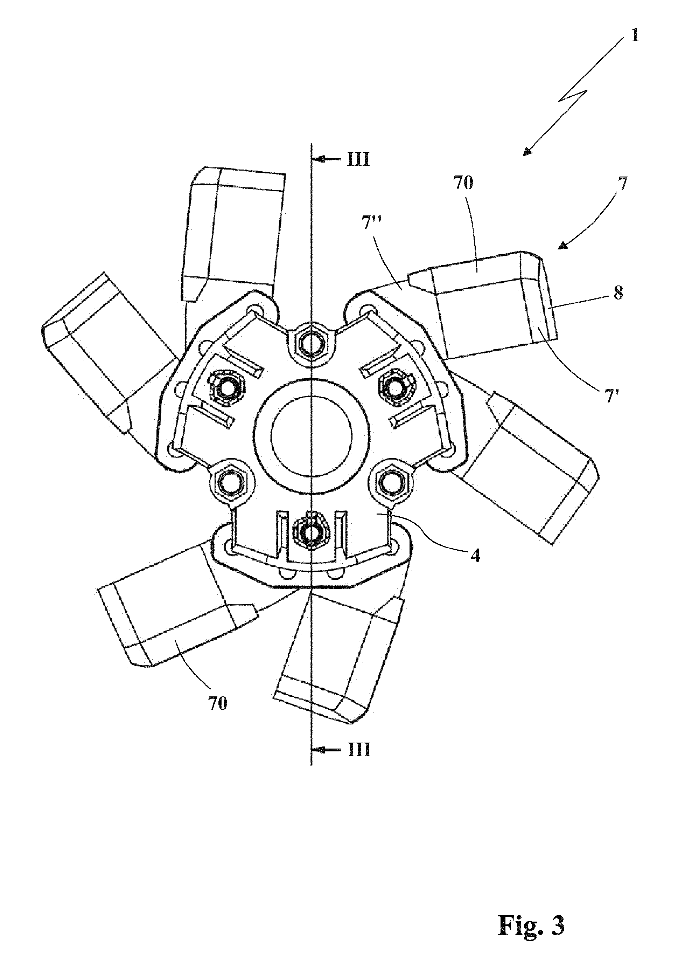

**FIG. 3** shows a front view of the cutter unit, object of the present invention, of figure 1;

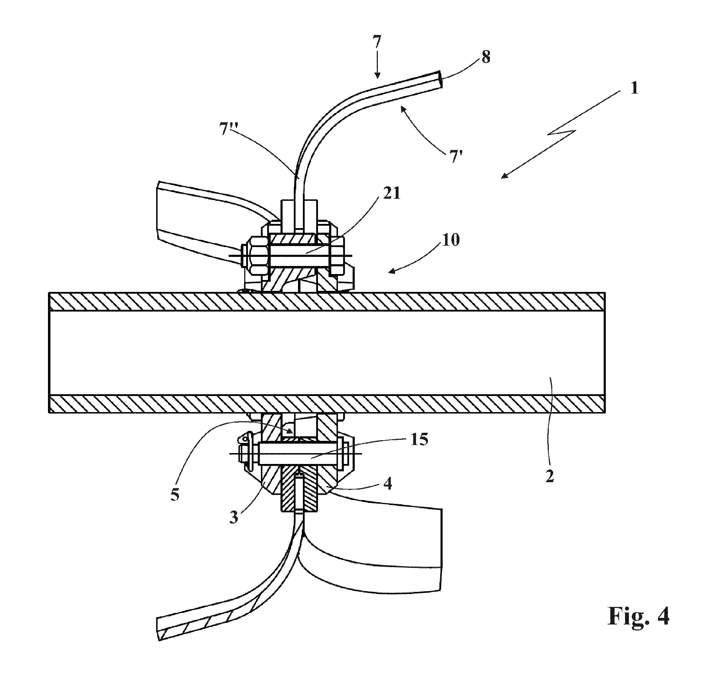

**FIG. 4** shows a section view of the cutter unit, object of the present invention, carried out along line III-III of figure 3;

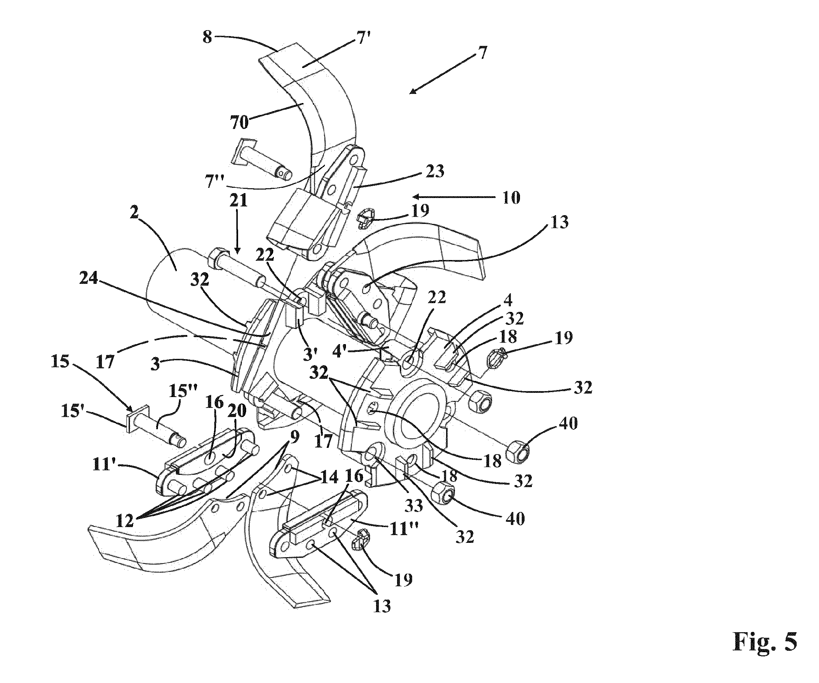

**FIG. 5** shows an exploded view of the cutter unit, object of the present invention, of figure 1.

### Detailed description of a preferred embodiment

With reference to the set of drawings, the reference number 1 indicates a cutter unit in its entirety, intended to be mounted in series with other cutter units on a shaft 2 of a rotary tiller machine.

More in detail, the rotary tiller machine comprises, in a *per se* conventional manner, a support frame intended to be towed on the earth to be worked by means of a tractor.

The frame is provided with two lateral flanks, between which a rotating driven shaft 2 with tubular form is rotatably mounted; such shaft receives its motion from a power take-off of the tractor by means of drive means. The latter comprise, for example, a drive shaft connected to the driven shaft 2 by means of gears or belts arranged on a flank of the frame.

The cutter units 1 are centrally fixed to the aforesaid driven shaft 2, in succession and at a regular distance. Such cutter units 1 can for example vary in number from 10 and 20 according to the model of tiller machine used. The cutter units 1 cause, following their rotation and following the advancement of the tiller machine, the chopping and mixing up of the surface layers of the earth/ground.

More in detail, each cutter unit 1 comprises a first fixed flange 3 preferably constituted by a metal plate with discoidal shape, which is rigidly and centrally fixed to the driven shaft 2 of the rotary tiller machine, e.g. by means of welding.

Each cutter unit 1 also comprises at least one second movable flange 4, mechanically couplable at the front of the first fixed flange 3. Preferably, such second flange 4 is also constituted by a metal plate with discoidal form, which is rigidly and centrally engaged to the driven shaft 2.

The second movable flange 4 can be moved along the driven shaft 2, given that it is provided with a central hole crossed by the latter and that it is mechanically couplable and decouplable with respect to the first fixed flange 3, as is better specified hereinbelow.

A plurality of blades 7 are housed between the two flanges 3, 4. Such blades 7 can vary in number from 2 and 6, and each blade is constituted by a shaped metal plate, usually with L-shaped form.

Of course, without departing from the protective scope of the present patent, the tiller machine 1 can provide for the use of any number of cutter units 1, each provided with a number of blades 7 usually comprised between 2 and 6; such blades (cutting blades or analogous rotating instruments) have the conformation most suitable for the work applications for which the machine 1 is intended.

Each blade 7 is provided with a work portion 7' for working the earth, which terminates with a first free end 8, and with a coupling portion 7" forming a single body with the work portion 7' and being continuously extended up to a second end 9 arranged at the first fixed flange 3, with which it is engaged.

Advantageously, on the work portion 7', a cutting blade 70 is arranged that is adapted to be the first to cut the earth.

The coupling portion 7" of the blade 7 is rigidly constrainable to the first fixed flange 3 and to the second movable flange 4 by means of removable fixing means 10.

The latter allow mechanically coupling each blade 7 in a removable manner to the flanges 3, 4 of the cutter unit 1 (or cutting blade-holder unit) in order to allow the necessary substitution or maintenance operations thereof.

According to the idea underlying the present invention, the first fixed flange 3 and the second movable flange 4 define together at least one retention guide 5 and in particular three retention guides 5 in accordance with the embodiment of the enclosed figures.

In addition, the aforesaid removable retention means 10 comprise at least one pair 11 of shaped plates 11', 11", each having an inner face and an outer face. More in detail, the first plate 11' is provided with at least two pins 12 projecting from its inner face and the second plate 11" is provided with at least two corresponding holes 13, aligned with the pins 12, obtained from its inner face and susceptible of receiving the pins 12 at their interior.

The coupling portion 7" of the blade 7 is interposed between the aforesaid pair of shaped plates 11', 11", with the pins 12 arranged to cross through two through holes 14 obtained in the same coupling portion 7".

The aforesaid pair of shaped plates 11', 11" can also be employed for retaining two blades 7 side-by-side, with the second ends 9 substantially aligned, as in the embodiment of the enclosed figures. For such purpose, the first plate 11' will be provided with four projecting pins 12 that are susceptible of being engaged in the four through holes 14 of the coupling portions 7" of the two blades 7 as well as, continuing in their extension, in the corresponding four holes 13 obtained in the second plate 11" aligned with the pins 12 and with the holes 14 of the blades 7.

The outer faces of the shaped plates 11', 11" of the pair of plates 11 define a slide that is engaged in the retention guide 5 of the flanges 3, 4.

Advantageously the aforesaid outer faces are provided with at least one longitudinal projecting rib 23, preferably with curved form, with form counter-shaped with respect to grooves 24 obtained on the inner faces of the first fixed flange 3 and of the second movable flange 4.

Preferably, multiple retention guides 5 are provided, spaced circumferentially around the two opposite flanges 3, 4, which are engageable by corresponding slides of the pairs of plates 11. In accordance with the embodiment illustrated in the enclosed figures, there are three guides 5 and slides of the pairs of plates 11, arranged spaced at 120 degrees from each other.

The guide 5 has extension substantially tangential with respect to a circular trajectory centered on the axis of the shaft 2, and therefore the insertion of the slide defined by the coupled plates with the coupling portion 7" of the blade 7 interposed (or with the portions 7" interposed in case of two blades 7) occurs orthogonally to the axis of the shaft 2 at a distance limited by the outer surface of the shaft 2 and with tangential movement.

In order to fix the slide in the guide 5, at least one locking pin 15 is provided which is susceptible of crossing through aligned openings 16 obtained on the plates 11' 11", thus preventing their sliding in the guide 5; the locking pin 15 is also removably and mechanically engaged, in particular at its ends, with the two opposite flanges 3, 4.

Advantageously, a locking pin 15 is provided for each pair of plates 11. Preferably, the openings 16 are constituted by through holes obtained aligned in the two opposite plates 11', 11".

Preferably, the engagement of each locking pin 15 with the two flanges 3, 4 occurs due to its head 15' which is abutted on the outer face of a flange (e.g. of the first fixed flange 3) and due to its stem 15" which crosses through a first hole 17 of the relative first flange 3 and a second hole 18 of the second flange 4, after having crossed through the openings 16 of the plates 11', 11", in order to then be locked inside the aforesaid holes due to a split pin 19 arranged to cross through a through hole obtained transversely at the free end of the stem 15" of the same locking pin 15.

Advantageously, in order to discharge the force transmitted by the earth/ground on the blades 7 in a more uniform manner on the plates 11', 11" and thus on the shaft 2, at least one plate of the pair 11 of plates and preferably both plates 11', 11" are provided on the inner face thereof with a profile 20 that is counter-shaped with respect to the edge of the end 9 of the coupling portion 7" of the blade 7. The coupling of the profile 20 of the plates 11', 11" with the edge of the end 9 of the blade 7 allows discharging the stresses over a much wider surface.

Such counter-shaped profile 20 preferably has a curved shape and is obtained with a step projecting from the inner face of each of the plates 11', 11". Preferably, the aligned openings 16 obtained on the plates 11' 11" mentioned above for the passage of the locking pin 15 are obtained at the portion of the plates 11', 11" thickened due to the presence of the step.

One or more fixing screws 21 (e.g. 3 at 120 degrees from each other), and in particular three fixing screws are also preferably provided, each insertable in second holes 22 obtained aligned on the first and on the second flange 3, 4 in order to rigidly retain the two flanges constrained together and to allow the adjustment of the size of the guide 5 that must precisely receive the slides of the pairs of plates 11. In addition, through the aforesaid fixing screws 21, the plates 11', 11" of the pairs of plates 11 can be pressed against each other in order to overcome clearances, due for example to wear, and to remove annoying noises.

The fixing screws 21 are preferably locked with self-locking nuts 40.

Preferably, the ends of the locking pin 15 at the head 15' and at the split pin 19 are protected between two projecting elements 32 which are extended from the outer face of the flanges 3, 4 and which advantageously delimit a volume protected from the abrasive action of the earth/ground.

Analogously, the ends of the fixing screws 21 at the head and at the self-locking bolts 40 can be protected between two other projecting elements 32 which are extended from the outer face of the flanges 3, 4 and which advantageously delimit a volume protected from the abrasive action of the earth/ground.

Otherwise, the ends of the locking pins 15 and/or of the fixing screws 21 can be embedded in depressions 33 obtained on the outer surfaces of the flanges 3, 4 as indicated for the fixing screws 21 in the enclosed figures of the considered embodiment.

Advantageously, the first fixed flange 3 and the second movable flange 4 are respectively provided with first and second coupling elements 3', 4' arranged on the respective inner faces and susceptible of being coupled together in order to transmit the motion of the shaft 2 from the first fixed flange 3 to the second movable flange 4.

In accordance with a preferred embodiment of the present invention, the shaped plates 11', 11" are obtained via molding in a single body with the respective longitudinal ribs 23 and furthermore the first plate 11' also has the pins 12 in a single body.

Analogously, the first fixed flange 3 and the second movable flange 4 are each obtained via molding in a single body with the respective first and second coupling elements 3',4'.

The cutter unit 1, object of the present invention, as described above allows obtaining a firm coupling of the blades 7 to the shaft 2 of the cutter machine and at the same time allows substituting the blades 7 in a simple and quick manner, in particular when it is necessary to substitute them with other new blades, due to the wear.

Operatively, in order to substitute the blades of a cutter unit 1, it is sufficient to remove the locking pins 15 from the holes of the flanges 17, 18 and from the openings 16 of the plates 11', 11" and then to extract the slides from the guides 5, so as to be able to separate the plates 11', 11" by extracting the pins 12 of the first plate 11' from the holes 14 of the blades 7 and from the holes 13 of the second plate 11".

Once the blades 7 have been substituted with other new blades or with blades that have different form, e.g. in order to carry out another functionality, one will first proceed with the reforming of the slides, then with their insertion in the guides 5, and then fastening them by inserting the locking pins 15. Before extracting the locking pins 15, it may be necessary to loosen the fixing screws 21 which tighten together the flanges 3, 4, before returning to tighten them once the slides with the new blades 7 have been returned in position.

The adjustment of the distance between the flanges 3, 4 through the fixing screws 21 can easily allow housing, between the plates 11', 11", blades 7 having different thickness and adapted to achieve slides of variable width.

The plates 11', 11" can be easily substituted with other new plates, once they have been worn.

The finding thus conceived therefore achieves the pre-established objects.

Of course, in the practical achievement thereof, it can also assume shapes and configurations that are different from that illustrated above, without departing from the present protective scope. In addition, all details can be substituted by technically equivalent elements and the shapes, size and materials used can be of any type according to requirements.

## Claims

1. Cutter unit for a rotary tiller machine, which comprises:
- at least one first fixed flange (3) susceptible of being rigidly and centrally fixed to a rotating driven shaft (2) of said rotary tiller machine;
- at least one second movable flange (4), mechanically couplable at the front of said first fixed flange (3);
- one or more blades (7), each of which rigidly constrainable to said first and second flange (3, 4) by means of removable retention means (10), and formed by a plate provided with a work portion (7') for working the earth, and with a coupling portion (7") forming a single body with the work portion (7');
**characterized in that**:
said first fixed flange (3) and said second movable flange (4) define together at least one retention guide (5);
said removable retention means (10) comprise:
- at least one pair of shaped plates (11', 11") each having an inner face and an outer face, and of which a first plate (11') is provided with at least two pins (12) projecting from its inner face and a second plate (11") is provided with at least two corresponding holes (13) obtained from its inner face and susceptible of receiving said pins (12); the outer faces of said pair of shaped plates (11) defining a slide engageable in said retention guide (5);
the coupling portion (7") of at least one said blade (7) being interposable between said pair of shaped plates (11) with said pins (12) arranged to cross through the through holes (14) obtained in said coupling portion (7");
- at least one locking pin (15) susceptible of crossing through aligned openings (16) obtained on the plates (11', 11") and of removably and mechanically engaging together the first fixed flange (3) and the second movable flange (4).

2. Cutter unit for a rotary tiller machine according to claim 1, **characterized in that** said at least one locking pin crosses through a first hole of said first flange and a second hole of said second flange and is locked at their interior through a split pin (19).

3. Cutter unit for a rotary tiller machine according to claim 1, **characterized in that** said at least one plate of said pair of plates is provided on its inner face with a profile (20) that is counter-shaped with respect to the edge of the end of the coupling portion (7") of said blade.

4. Cutter unit for a rotary tiller machine according to claim 1, **characterized in that** it comprises one or more fixing screws (21), and in particular three fixing screws, each insertable in second holes aligned with said first and second flange in order to adjust the width of said retention guide (5).

5. Cutter unit for a rotary tiller machine according to claim 1, **characterized in that** at least one end of said locking pin (15) is protected by at least one element (32) projecting from the outer face of one said flange and/or by the insertion in a depression (33) obtained on the outer face of one said flange.

6. Cutter unit for a rotary tiller machine according to claim 4, **characterized in that** at least one end of said fixing screws (21) is protected by at least one element projecting from the outer face of one said flange and/or by the insertion in a depression obtained on the outer face of one said flange.

7. Cutter unit for a rotary tiller machine according to claim 1, **characterized in that** said first fixed flange and second movable flange are respectively provided with first and second coupling elements (3', 4') arranged on the respective inner faces and susceptible of being coupled together in order to transmit motion from said first fixed flange to said second movable flange.

8. Cutter unit for a rotary tiller machine according to claim 1, **characterized in that** said first and second shaped plate are provided with at least one longitudinal rib (23) projecting from the outer surface and defining said slide.

9. Cutter unit for a rotary tiller machine according to claim 8, **characterized in that** said first shaped plate is obtained via molding in a single body with said respective rib and with said pins and that said second shaped plate is obtained via molding in a single body with said respective rib.

10. Cutter unit for a rotary tiller machine according to claim 8, **characterized in that** said first fixed flange and second movable flange are each obtained via molding in a single body with the respective first and second coupling elements.
